# EUROPÄISCHE PATENTSCHRIFT

(11) **EP 3 869 047 B1**
(45) Veröffentlichungstag und Bekanntmachung des Hinweises auf die Patenterteilung: **10.01.2024**
(21) Anmeldenummer: 20174305.1
(22) Anmeldetag: 13.05.2020
(51) Int. Cl.: F16B 5/02, F16B 5/06, F16B 19/02, F16B 21/08

(54) **STÜTZELEMENT AUFWEISEND EINE STÜTZHÜLSE UND EIN LAGERMITTEL, LAGERMITTEL ZUR BILDUNG EINES SOLCHEN STÜTZELEMENTS, ANORDNUNG AUFWEISEND EIN SOLCHES STÜTZELEMENT UND EINEN HOHLKÖRPER SOWIE VERFAHREN ZUR BILDUNG EINER SOLCHEN ANORDNUNG**
SUPPORT ELEMENT COMPRISING A SUPPORT SLEEVE AND BEARING MEANS, BEARING MEANS FOR FORMING SUCH A SUPPORT MEMBER, ASSEMBLY COMPRISING SUCH A SUPPORT MEMBER AND A HOLLOW BODY AND METHOD OF FORMING SUCH AN ASSEMBLY
ÉLÉMENT D'APPUI COMPORTANT UN MANCHON D'APPUI ET UN MOYEN DE PALIER, MOYEN DE PALIER DESTINÉ À LA FORMATION D'UN TEL ÉLÉMENT D'APPUI, AGENCEMENT COMPORTANT UN TEL ÉLÉMENT D'APPUI ET UN CORPS CREUX AINSI QUE PROCÉDÉ DE FORMATION D'UN TEL AGENCEMENT

(30) Priorität: 19.02.2020 DE 102020104431
(43) Veröffentlichungstag der Anmeldung: 25.08.2021
(73) Patentinhaber: BBA S.r.l., 63076 Centobuchi di Monteprandone (AP) (IT)
(72) Erfinder: Hanratty, Paul, Southampton SO31 9BQ (GB)
(74) Vertreter: Franke, Markus

(56) Entgegenhaltungen:
- EP-A1- 3 581 811
- DE-A1- 10 351 716
- DE-A1- 19 916 098
- DE-A1-102010 045 833
- US-A1- 2004 197 136
- US-A1- 2006 202 101
- US-A1- 2008 075 403
- US-A1- 2019 338 794
- US-B1- 6 910 671

## Beschreibung

Die vorliegende Erfindung betrifft ein Stützelement aufweisend eine Stützhülse und ein Lagermittel, eine Anordnung aufweisend ein solches Stützelement und einen Hohlkörper sowie ein Verfahren zur Bildung einer solchen Anordnung.

In der Praxis ist es häufig problematisch, bei Einwirken von axialen Kräften auf einen Hohlkörper, beispielsweise infolge einer Befestigung eines weiteren Bauteils an diesem Körper, eine Verformung des Hohlkörpers, insbesondere von zwei in axialer Richtung beabstandeten, gegenüberliegende Wandungen des Hohlkörpers, zu vermeiden. Vorliegend wird unter Hohlkörper jedes Bauteil verstanden, welches zwei in einer axialen Richtung beabstandete Wandungen aufweist, folglich zwischen diesen beiden Wandungen ein Zwischenraum gebildet ist. Es ist durchaus denkbar, dass in dem Zwischenraum ein weiches, folglich nicht formstabiles Material, wie beispielsweise ein Isoliermaterial, insbesondere ein Schaumstoff, angeordnet ist. Der Hohlkörper braucht nicht notwendiger Weise vollumfänglich umschließende Wandungen aufzuweisen. Der Hohlkörper kann auch durchaus U-förmig ausgebildet sein, wobei die beiden Schenkel des U-förmigen Profils die in der axialen Richtung beabstandeten, gegenüberliegenden Wandungen bilden.

Aus der EP 3 581 811 A1 ist ein System zur Befestigung einer ersten Komponente an einer zweiten Komponente bekannt, aufweisend eine erste Begrenzungshülse mit einem ersten Anlageflansch und eine zweite Begrenzungshülse mit einem zweiten Anlageflansch, wobei die erste und die zweite Begrenzungshülse von gegenüberliegenden Seiten in eine Durchgangsöffnung der ersten Komponente einsetzbar und durch Einsetzen der ersten Begrenzungshülse in die zweite Begrenzungshülse miteinander verbindbar sind, sodass der erste Anlageflansch und der zweite Anlageflansch von gegenüberliegenden Seiten an der ersten Komponente anliegen.

Aus der DE 10 2010 045 833 A1 ist ferner eine Befestigereinheit und Montageeinheit zur Fixierung dünnwandiger Montageteile bekannt.

Die US 2019/0338794 A1, die DE 103 51 716 A1, die US 2008/0075403 A1, die US 2004/0197136 A1, die DE 199 16 098 A1, die US 2006/0202101 A1 und die US 6 910 671 B1 zeigen weiteren Stand der Technik.

Aufgabe der vorliegenden Erfindung ist es, einen Gegenstand, eine Anordnung sowie ein Verfahren anzugeben, die die vorgenannte Problematik lösen.

Diese Aufgabe wird durch ein Stützelement, dass die Merkmale des Anspruchs 1 aufweist gelöst. Vorteilhafte Weiterbildungen sind Gegenstand der Unteransprüche. Ferner wird die Aufgabe durch eine Anordnung gelöst, die die Merkmale des Anspruchs 11 aufweist. Die Aufgabe wird ferner gelöst durch ein Verfahren, das die Merkmale des Anspruchs 13 aufweist.

Das erfindungsgemäße Stützelement ist wie folgt ausgebildet:
Stützelement, insbesondere zur Aufnahme von mittels eines Befestigungsmittels aufgebrachten axialen Kräften, wobei das Stützelement eine Stützhülse aufweist, wobei die Stützhülse eine in axialer Richtung ausgebildete Durchgangsöffnung, insbesondere zur Aufnahme des Befestigungsmittels, aufweist, wobei das Stützelement ein Lagermittel aufweist, wobei die Stützhülse in dem Lagermittel gelagert ist, wobei die Stützhülse und das Lagermittel miteinander verbunden sind, wobei das Lagermittel einen Schaft mit einem ersten Schaftabschnitt und einem in axialer Richtung an den ersten Schaftabschnitt angrenzenden zweiten Schaftabschnitt aufweist, wobei der erste Schaftabschnitt ein Haltemittel aufweist, wobei das Haltemittel gegenüber dem zweiten Schaftabschnitt nach radial außen hervorsteht und entgegen einer Rückstellkraft nach radial innen verformbar ist.

Nach dem Einbringen eines solchen Stützelements in eine entsprechende Durchgangsöffnung einer Wandung eines Bauteils, bspw. eines Hohlkörpers, von einer ersten Seite der Wandung aus, hält das Haltemittel das Stützelement in der Wandung und verhindert ein ungewolltes Lösen oder Herausfallen des Stützelements aus der Wandung. Dadurch kann das Bauteil ohne besondere Vorsichtsmaßnahmen gehandhabt werden. Insbesondere kann auf aufwendige Fixierungsmaßnahmen des Stützelements in der Wandung, wie beispielsweise ein Umformen, Clinchen, Verkleben oder Verschweißen, verzichtet werden. Es ist durchaus denkbar, dass das Stützelement mittels des Haltemittels kraftschlüssig in der Wandung gehalten ist. Vorzugsweise ist das Stützelement allerdings mittels des Haltemittels formschlüssig in der Wandung gehalten. Vorzugsweise verformt sich das Haltemittel aufgrund der Rückstellkraft auf einer der ersten Seite gegenüberliegenden zweiten Seite der Wandung nach radial außen, sodass das Haltemittel oder zumindest ein Teilbereich des Haltemittels nach dem Einbringen die Wandung in axialer Richtung hintergreift.

Das Lagermittel ist vorzugsweise hülsenartig ausgebildet.

Der Schaft ist vorzugsweise radial außen bezüglich der Stützhülse ausgebildet.

Vorzugsweise umschließt das Lagermittel die Stützhülse umlaufend.

Vorzugsweise kontaktiert das Lagermittel die Stützhülse in der radialen Richtung.

Als besonders vorteilhaft wird es angesehen, wenn der Schaft die Stützhülse umlaufend umschließt.

Insbesondere liegt der zweite Schaftabschnitt an der Stützhülse an. Der zweite Schaftabschnitt liegt insbesondere umlaufend an der Stützhülse an.

Das Haltemittel kann beispielsweise als umlaufender Wulst ausgebildet sein.

Das Haltemittel kann auch als umlaufender, gegenüber dem restlichen Schaft herausgestellter oder herausgebogener Kragen ausgebildet sein.

Vorzugsweise durchsetzt die Stützhülse das Lagermittel.

Insbesondere ist das Lagermittel aus einem elektrisch isolierenden Material oder weist ein solches Material auf. Dadurch kann ein elektrisch leitender Kontakt zwischen der Stützhülse und weiteren Bauteilen, beispielsweise einer Wandung, in der das Stützelement angeordnet ist, vermieden werden.

Das Lagermittel oder zumindest das Haltemittel besteht vorzugsweise aus einem elastisch verformbaren Material.

Bei der Verbindung zwischen der Stützhülse und dem Lagermittel kann es sich beispielsweise um ein Clinch-Verbindung, ein Klebeverbindung und/oder eine Presspassung handeln.

Vorzugsweise weist der zweite Schaftabschnitt eine geschlossene Mantelfläche auf.

Als besonders vorteilhaft wird es angesehen, wenn das Haltemittel mehrere Halteelemente aufweist. Die Halteelemente können beispielsweise als Haltenasen, als Wulste oder als Stege ausgebildet sein.

Bei mehreren Halteelementen wird es als besonders vorteilhaft angesehen, wenn diese umlaufend um die Stützhülse angeordnet sind. Die Halteelemente sind vorzugsweise in derselben axialen Ebene angeordnet. Dadurch wird das Einbringen des Stützelements in eine Durchgangsöffnung einer Wandung erleichtert.

Die Halteelemente sind insbesondere rotationssymmetrisch bezüglich einer in axialer Richtung Z ausgebildeten Achse angeordnet, wobei eine Zähligkeit n größer eins ist, vorzugsweise die Zähligkeit n der Anzahl der Halteelemente entspricht.

Als besonders vorteilhaft wird es angesehen, wenn das Lagermittel einen Kopfabschnitt aufweist, wobei der Schaft in der axialen Richtung an den Kopfabschnitt angrenzt, wobei der Kopfabschnitt nach radial außen gegenüber dem zweiten Schaftabschnitt hervorsteht, vorzugsweise gegenüber dem ersten Schaftabschnitt hervorsteht. Der Kopfabschnitt dient insbesondere dazu, ein weiteres Einführen des Lagermittels und somit des Stützelements in eine Durchgangsöffnung einer Wandung zu verhindern. Vorzugsweise ist der Kopfabschnitt daher derart gestaltet, dass dieser auf der ersten Seite der Wandung zur Anlage kommt, von der aus das Lagermittel bzw. das Stützelement in die Durchgangsöffnung eingebracht wird.

Das Lagermittel ist vorzugsweise einteilig ausgebildet. Ferner ist die Stützhülse vorzugsweise einteilig ausgebildet.

Das Lagermittel besteht erfindungsgemäß aus einem ersten Material und die Stützhülse besteht aus einem zweiten Material, wobei das erste Material und das zweite Material unterschiedlich sind. Vorzugsweise weist das zweite Material ein größere Härte auf als das erste Material. Das erste Material ist erfindungsgemäß ein Kunststoff. Das zweite Material ist
erfindungsgemäß ein Metall oder eine Legierung, insbesondere eine Metalllegierung. Beispielsweise handelt es sich bei dem zweiten Material um einen Stahl, einen Edelstahl oder eine Aluminiumlegierung.

Die Stützhülse ist vorzugsweise als Kreiszylinder oder zumindest teilweise als Kreiszylinder ausgebildet. Dadurch ist die Stützhülse besonders einfach und kostengünstig herstellbar oder beschaffbar. Ferner wird ein nachträgliches Einbringen, insbesondere Einstecken, in das Lagermittel erleichtert, da auf keine besondere Ausrichtung der Bauteile zueinander geachtet werden muss. In diesem Zusammenhang wird es als besonders vorteilhaft angesehen, wenn das Lagermittel eine Aufnahme zum Einstecken der Stützhülse aufweist.

Die Stützhülse kann über deren axialen Länge geschlitzt ausgebildet sein. Diese Ausbildung ermöglicht es, die Stützhülse durch Biegen aus einem plattenförmigen Material herzustellen, insbesondere aus einer Metallplatte bzw. einem Metallstreifen. Es ist durchaus denkbar, dass die Stützhülse radial außen einen umlaufenden Vorsprung aufweist, wobei der erste Schaftabschnitt zwischen dem Vorsprung und dem zweiten Schaftabschnitt ausgebildet ist. Die Stützhülse kann durchaus auf der dem Schaft abgewandten Seite des Kopfabschnitts radial außen einen umlaufenden Vorsprung aufweisen. Dadurch kann ein zu weites Einführen der Stützhülse in das Lagermittel vermieden werden.

Vorzugsweise nimmt der radiale Überstand des Haltemittels, insbesondere des jeweiligen Halteelements, gegenüber dem zweiten Schaftabschnitt entgegen der axialen Richtung zu. Insbesondere ist das Haltemittel, vorzugsweise das jeweilige Halteelement, keilförmig ausgebildet. Dadurch wird ein Einführen des Lagermittels in eine Durchgangsöffnung einer Wandung erleichtert, da die Zunahme im Querschnitt bzw. die Keilform eine Krafteinwirkung auf das Haltemittel bzw. die Haltelemente nach radial innen beim Einführen begünstigt. Dadurch wird die Montage des Lagermittels bzw. des Stützelements in der Wandung erleichtert.

Als besonders vorteilhaft wird es angesehen, wenn die Stützhülse in der axialen Richtung gegenüber dem Lagermittel hervorsteht oder bündig mit dem Lagermittel abschließt und/oder die Stützhülse entgegen der axialen Richtung gegenüber dem Lagermittel hervorsteht oder bündig mit dem Lagermittel abschließt. Derartige Gestaltungen sind insbesondere dann von Vorteil, wenn eine unmittelbare Kontaktierung der Stützhülse, beispielsweise zwecks Herstellens einer elektrischen Verbindung, in einfacher Art und Weise möglich sein soll.

In einer bevorzugten Ausführungsform weist der zweite Schaftabschnitt einen die Stützhülse in axialer Richtung hintergreifenden Abschnitt auf. Dies ist insbesondere von Vorteil, wenn in diesem Bereich eine unmittelbare Kontaktierung der Stützhülse vermieden werden soll, beispielsweise zwecks einer elektrischen Isolierung.

Besonders bevorzugt weist das Haltemittel mehrere als Stege ausgebildete Halteelemente auf, wobei der jeweilige Steg im Bereich eines Endes des Stegs mit dem übrigen Schaft verbunden ist und das andere Ende des jeweiligen Stegs ein freies Ende ist. Vorzugsweise handelt es sich bei dem freien Ende um das dem zweiten Schaftabschnitt abgewandte Ende.

Es wird als vorteilhaft angesehen, wenn der erste Schaftabschnitt eine Ausnehmung zur Aufnahme der Stege, bei einem Verformen der Stege nach radial innen, aufweist oder wobei der erste Schaftabschnitt jeweils eine Ausnehmung zur Aufnahme des jeweiligen Stegs, bei einem Verformen des jeweiligen Stegs nach radial innen, aufweist.

Dies Ausnehmung ist vorzugsweise als Rücksprung oder Durchgangsöffnung ausgebildet
Ferner wird es als vorteilhaft angesehen, wenn die jeweilige Ausnehmung eine tangentiale Erstreckung aufweist, wobei die tangentiale Erstreckung der jeweiligen Ausnehmung größer ist als eine tangentiale Erstreckung des jeweiligen Stegs. Dadurch wird vermieden, dass eine tangentiale Verformung des Stegs ein Verformen des Stegs nach radial innen behindert. Insofern ist ein gewisses tangentiales Spiel zwischen Ausnehmung und Steg gegeben.

In einer bevorzugten Weiterbildung weist der Kopfabschnitt in einem bezüglich des Schafts radial äußeren Bereich zumindest eine den Kopfabschnitt in axialer Richtung durchsetzende Durchtrittsöffnung auf. Vorzugsweise ist die zumindest eine Durchtrittsöffnung benachbart zu dem Haltemittel oder einem der Halteelemente ausgebildet. Vorzugsweise weist der Kopfabschnitt mehrere solcher Durchtrittsöffnungen auf. Die Durchtrittsöffnung bzw. Durchtrittsöffnungen ermöglichen eine optische Kontrolle der Stellung des Haltemittels bzw. der Halteelemente. Ferner ermöglichen die Durchtrittsöffnungen eine optische Kontrolle der finalen Stellung des Stützelements nach der Einbringung des Stützelements in ein Bauteil, da bei einer korrekten Stellung das Haltemittel typischerweise zumindest teilweise von dem Bauteil verdeckt werden sollte.

Vorzugsweise sind der Kopfabschnitt und das Haltemittel in der axialen Richtung beabstandet. Vorzugsweise ist der Abstand derart, dass der Zwischenraum zwischen Kopfabschnitt und Haltemittel zur Aufnahme einer Wandung eines Bauteils geeignet ist.

Vorzugsweise ist eine radiale Erstreckung des zweiten Schaftabschnitts, insbesondere ein Durchmesser des zweiten Schaftabschnitts, kleiner als eine radiale Erstreckung bzw. kleiner als ein Durchmesser einer Durchgangsöffnung einer Wandung eines Bauteils, in die das Lagermittel eingebracht werden soll.

Vorzugweise ist das Lagermittel ein Spritzgussteil.

Insbesondere ist das Lagermittel an die Stützhülse angespritzt, vorzugsweise unmittelbar an die Stützhülse angespritzt.

Die im Zusammenhang mit dem Stützelement offenbarten Merkmale, die das Lagermittel betreffen, gelten entsprechend für das Lagermittel als solches, also auch ohne das Vorliegen eines Stützelements bzw. ohne das Vorliegen einer Stützhülse.

Die erfindungsgemäße Anordnung weist ein Stützelement nach einer der obigen Ausführungsformen und einen Hohlkörper auf. Der Hohlkörper weist zwei in axialer Richtung beabstandete Wandungen auf, wobei die erste Wandung der zwei Wandungen eine erste Durchgangsöffnung aufweist und die zweite Wandung der zwei Wandungen eine zweite Durchgangsöffnung aufweist. Vorzugsweise ist die zweite Durchgangsöffnung als eine der ersten Durchgangsöffnung in einer axialen Richtung gegenüberliegende, zweite Durchgangsöffnung ausgebildet. Das Stützelement durchsetzt die erste Durchgangsöffnung, wobei das Haltemittel auf einer der zweiten Wandung zugewandten Seite der ersten Wandung angeordnet ist und das Haltemittel die erste Wandung auf der der zweiten Wandung zugewandten Seite in axialer Richtung hintergreift. Dadurch ist ein Formschluss gebildet, wodurch ein Lösen bzw. ein Herausfallen des Stützelements aus dem Hohlkörper vermieden wird. Dadurch kann der Hohlkörper mit darin angeordnetem Stützelement gehandhabt werden, ohne dass die Gefahr eines Lösens oder Herausfallens des Stützelements besteht.

Als besonders vorteilhaft wird es angesehen, wenn das Lagermittel einen Kopfabschnitt aufweist, wobei der Kopfabschnitt auf einer der zweiten Wandung abgewandten Seite der ersten Wandung angeordnet ist. Insbesondere ist eine radiale Ausdehnung des Kopfabschnitts größere als eine radiale Ausdehnung der ersten Durchgangsöffnung. Dadurch wird ein zu weites Einführen des Stützelements in den Hohlkörper verhindert. Da zudem die erste Wandung zwischen dem Kopfabschnitt und den Halteelementen angeordnet ist, ist das Stützelement besonders sicher, insbesondere verliersicher, in der Wandung gelagert.

Vorzugsweise kontaktiert das Lagermittel oder die Stützhülse die zweite Wandung auf einer der ersten Wandung zugewandten Seite. Dadurch wird die Gefahr einer Verformung bzw. das Ausmaß der möglichen Verformung des Hohlkörpers verringert.

Vorzugsweise kontaktiert die Stützhülse die zweite Wandung unmittelbar. Dies ist insbesondere von Vorteil, wenn ein elektrischer Kontakt zwischen der zweiten Wandung und der Stützhülse erreicht werden soll.

Vorzugsweise ist eine radiale Erstreckung des zweiten Schaftabschnitts, insbesondere ein Durchmesser des zweiten Schaftabschnitts, kleiner als eine radiale Erstreckung der ersten Durchgangsöffnung. Dadurch ist das Einbringen des Lagermittels in die erste Durchgangsöffnung erleichtert. Zudem kann das Stützelement in der radialen Richtung etwas verschoben werden, bspw. um Fertigungstoleranzen, insbesondere hinsichtlich einer Fluchtung der beiden Durchgangsöffnungen, auszugleichen.

Vorzugsweise weist die Anordnung ein Befestigungsmittel auf, wobei das Befestigungsmittel das Stützelement, die erste Durchgangsöffnung und die zweite Durchgangsöffnung durchsetzt, wobei das Befestigungsmittel auf den einander abgewandten Seiten der zwei Wandungen jeweils ein Anschlagselement aufweist, wobei das eine Anschlagselement gegenüber dem anderen Anschlagselement in der axialen Richtung verstellbar ist.

Die Anschlagselemente dienen dem Verspannen des Befestigungsmittels gegen den Hohlkörper. Bei dem Befestigungsmittel kann es sich beispielsweise um eine Schrauben-Mutter-Anordnung oder eine Anordnung von einem Gewindestab und zwei Muttern handeln. Typischerweise werden zwischen den Hohlkörper und zumindest einem der Anschlagselemente weitere Bauteile eingebracht, die auf diese Weise mit dem Hohlkörper verbunden werden. Beim Verspannen des Befestigungsmittels gegen den Hohlkörper nimmt die Stützhülse die durch das Verspannen aufgebrachten Kräfte auf, sodass eine Verformung des Hohlkörpers vermieden oder vermindert wird.

Das erfindungsgemäße Verfahren ist zur Bildung einer Anordnung nach einem der vorigen Aspekte geeignet. Das Verfahren weist zumindest die folgenden Verfahrensschritte auf:
- Bereitstellen eines Stützelements nach einer der vorigen Ausführungsformen,
- Bereitstellen eines Hohlkörpers, wobei der Hohlkörper zwei in axialer Richtung beabstandete Wandungen aufweist, wobei die erste Wandung der zwei Wandungen eine erste Durchgangsöffnung und die zweite Wandung der zwei Wandungen eine zweite Durchgangsöffnung, vorzugsweise eine der ersten Durchgangsöffnung in einer axialen Richtung gegenüberliegende, zweite Durchgangsöffnung, aufweist,
- Einführen des Lagermittels in die erste Durchgangsöffnung von einer der zweiten Wandung abgewandten Seite der ersten Wandung aus, derart, dass das Haltemittel beim Einführen zunächst entgegen der Rückstellkraft nach radial innen verformt wird und im Anschluss an die Verformung nach radial innen sich das Haltemittel aufgrund der Rückstellkraft nach radial außen verformt, sodass das Haltemittel auf einer der zweiten Wandung zugewandten Seite der ersten Wandung angeordnet ist und die erste Wandung auf der der zweiten Wandung zugewandten Seite in axialer Richtung hintergreift.

Es ist durchaus denkbar, dass die Stützhülse und das Lagermittel zunächst separate Bauteile bilden, wobei die Stützhülse, im Anschluss an das Einführen des Lagermittels in die erste Durchgangsöffnung, in das Lagermittel eingeführt wird, insbesondere eingesteckt wird.

Das Einführen des Lagermittels in die erste Durchgangsöffnung, insbesondere des Stützelements in die erste Durchgangsöffnung, und/oder das Einführen der Stützhülse in das Lagermittel erfolgt vorzugsweise händisch. Dadurch kann auf spezielle Setzwerkzeuge, Umformmaschinen, Schweißwerkzeuge und ähnliches verzichtet werden. Zudem entfallen die üblicherweise erforderlichen zusätzliche Verfahrensschritte zum Befestigen/Fixieren der Stützhülse in der Wandung. Die Verwendung des erfindungsgemäßen Lagermittels bzw. Stützelements vereinfacht somit die sichere Lagerung der Stützhülse in der Wandung.

Vorzugsweise sind die erste Durchgangsöffnung und/oder die zweite Durchgangsöffnung als kreisförmige Öffnung ausgebildet.

Anhand der nachfolgenden Figuren wird die Erfindung näher erläutert ohne auf diese beschränkt zu sein.

Es zeigen:
Figur 1: Eine erste Ausführungsform eines Stützelements in einer Ansicht gemäß dem Pfeil I in Figur II,
Figur 2: Das Stützelement in einer Schnittansicht gemäß der Linie A-A in Figur 1,
Figur 3: Das Stützelement gemäß Figur 1 in einer Ansicht gemäß dem Pfeil III in Figur 4,
Figur 4: Das Stützelement in einer Ansicht gemäß dem Pfeil IV in Figur 3,
Figur 5: Das Stützelement in einer Ansicht gemäß dem Pfeil V in Figur 4,
Figur 6: Eine Anordnung eines Hohlkörpers und der ersten Ausführungsform des Stützelements, in einer Ansicht gemäß dem Pfeil VI in Figur 7,
Figur 7: Die Anordnung in einer Schnittansicht gemäß der Linie B-B in Figur 6,
Figur 8: Eine Anordnung eines Hohlkörpers und der ersten Ausführungsform des Stützelements, in einer Schnittansicht.
Figuren 9: Ein Lagermittel der ersten Ausführungsform des Stützelements in einer Ansicht gemäß dem Pfeil IX in Figur 10,
Figur 10: Das Lagermittel in einer Schnittansicht gemäß der Linie A-A in Figur 9,
Figur 11: Das Lagermittel gemäß Figur 9 in einer perspektivischen Ansicht,
Figur 12: Eine zweite Ausführungsform des Stützelements in einer Ansicht gemäß dem Pfeil XII in Figur 13,
Figur 13: Das Stützelement in einer Schnittansicht gemäß der Linie A-A in Figur 12,
Figur 14: Das Stützelement gemäß Figur 12 in einer Ansicht gemäß dem Pfeil XIV in Figur 15,
Figur 15: Das Stützelement in einer Ansicht gemäß dem Pfeil XV in Figur 14,
Figur 16: Das Stützelement in einer Ansicht gemäß dem Pfeil XVI in Figur 15,
Figur 17: Eine dritte Ausführungsform des Stützelements in einer Ansicht gemäß dem Pfeil XVII in Figur 18,
Figur 18: Das Stützelement in einer Schnittansicht gemäß der Linie A-A in Figur 17,
Figur 19: Das Stützelement gemäß Figur 17 in einer Ansicht gemäß dem Pfeil XIX in Figur 20,
Figur 20: Das Stützelement in einer Ansicht gemäß dem Pfeil XX in Figur 19,
Figur 21: Das Stützelement in einer Ansicht gemäß dem Pfeil XXI in Figur 20,
Figur 22: Das Lagermittel der dritten Ausführungsform des Stützelements in einer ersten perspektivischen Ansicht,
Figur 23: Das Lagermittel der dritten Ausführungsform des Stützelements in einer zweiten perspektivischen Ansicht,
Figur 24: Das Lagermittel der dritten Ausführungsform des Stützelements in einer dritten perspektivischen Ansicht,
Figur 25: Eine vierte Ausführungsform des Stützelements in einer Ansicht gemäß dem Pfeil XXV in Figur 26,
Figur 26: Das Stützelement in einer Schnittansicht gemäß der Linie A-A in Figur 25,
Figur 27: Das Stützelement gemäß Figur 25 in einer Ansicht gemäß dem Pfeil XXVII in Figur 28,
Figur 28: Das Stützelement in einer Ansicht gemäß dem Pfeil XXVIII in Figur 27,
Figur 29: Das Stützelement in einer Ansicht gemäß dem Pfeil XXIX in Figur 28,
Figur 30: Eine fünfte Ausführungsform des Stützelements in einer perspektivischen Ansicht,
Figur 31: Eine Stützhülse dieses Stützelements in einer perspektivischen Ansicht.

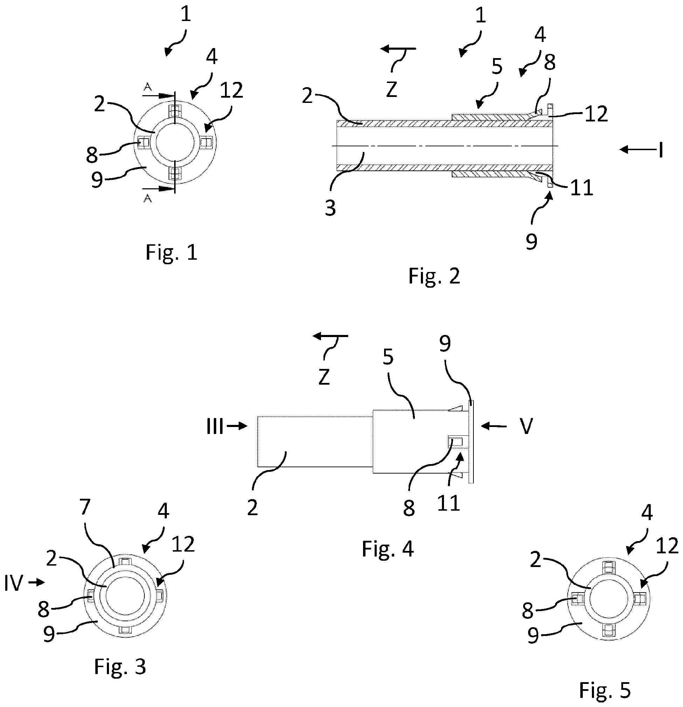

Die Figuren 1 bis 5 zeigen ein Stützelement 1, insbesondere zur Aufnahme von mittels eines Befestigungsmittels 18 aufgebrachten axialen Kräften, wobei das Stützelement 1 eine Stützhülse 2 aufweist, wobei die Stützhülse 2 eine in axialer Richtung Z ausgebildete Durchgangsöffnung 3, insbesondere zur Aufnahme des Befestigungsmittels 18, aufweist, wobei das Stützelement 1 ein Lagermittel 4 aufweist, wobei die Stützhülse 2 in dem Lagermittel 4 gelagert ist, wobei die Stützhülse 2 und das Lagermittel 4 miteinander verbunden sind, wobei das Lagermittel 4 einen Schaft 5 mit einem ersten Schaftabschnitt 6 und einem in axialer Richtung Z an den ersten Schaftabschnitt 6 angrenzenden zweiten Schaftabschnitt 7 aufweist, wobei der erste Schaftabschnitt 6 ein Haltemittel aufweist, wobei das Haltemittel gegenüber dem zweiten Schaftabschnitt 7 nach radial außen hervorsteht und entgegen einer Rückstellkraft nach radial innen verformbar ist.

Das Lagermittel 4 ist hülsenartig ausgebildet. Das Lagermittel 4 kontaktiert die Stützhülse 2 in der radialen Richtung. Der zweite Schaftabschnitt 7 liegt umlaufend an der Stützhülse 2 an. Die Stützhülse 2 durchsetzt vorliegend das Lagermittel 4. Das Haltemittel weist vorliegend mehrere Halteelemente 8 auf.

Das Lagermittel 4 weist einen Kopfabschnitt 9 auf, wobei der Schaft 5 in der axialen Richtung Z an den Kopfabschnitt 9 angrenzt, wobei der Kopfabschnitt 9 nach radial außen gegenüber dem ersten Schaftabschnitt 6 hervorsteht.

Das Lagermittel 4 und die Stützhülse 2 sind jeweils einteilig ausgebildet.

Das Lagermittel 4 besteht aus einem ersten Material und die Stützhülse 2 besteht aus einem zweiten Material, wobei das erste Material und das zweite Material unterschiedlich sind. Vorzugsweise weist das zweite Material ein größere Härte auf als das erste Material.

Erfindungsgemäß ist das erste Material ein Kunststoff und das zweite Material ist ein Metall oder eine Metalllegierung. Vorzugsweise ist das erste Material ein elektrisch isolierendes Material.

Vorliegend ist die Stützhülse 2 als Kreiszylinder ausgebildet.

Die Stützhülse 2 kann durchaus auf der dem Schaft 5 abgewandten Seite des Kopfabschnitts 9 einen umlaufenden Vorsprung aufweisen.

Der radiale Überstand des Haltemittels gegenüber dem zweiten Schaftabschnitt 7, vorliegend des jeweiligen Halteelements 8 gegenüber dem zweiten Schaftabschnitt 7, nimmt entgegen der axialen Richtung Z zu. Dadurch wird ein Einführen des Stützelements 1 bzw. des Lagermittels 4, mit dem zweiten Schaftabschnitt 7 vorlaufend, in eine Durchgangsöffnung eines Bauteils erleichtert.

Die Halteelemente 8 sind in derselben axialen Ebene angeordnet und umlaufend um die Stützhülse 2 angeordnet. Die Halteelemente 8 sind rotationssymmetrisch bezüglich einer in axialer Richtung Z ausgebildeten Achse angeordnet, wobei eine Zähligkeit n größer eins ist, wobei vorliegend die Zähligkeit n der Anzahl der Halteelemente 8 entspricht und somit vier beträgt, n=4.

Vorliegend steht die Stützhülse 2 in der axialen Richtung Z gegenüber dem Lagermittel 4 hervor und die Stützhülse 2 schließt entgegen der axialen Richtung Z bündig mit dem Lagermittel 4, vorliegend dem Kopfabschnitt 9 ab.

Die Halteelemente 8 sind vorliegend als Stege ausgebildet, wobei der jeweilige Steg im Bereich eines Endes des Stegs mit dem übrigen Schaft 5 verbunden ist und das andere Ende des jeweiligen Stegs ein freies Ende ist. Das freie Ende ist vorliegend dem zweiten Schaftabschnitt 7 abgewandt.

Der erste Schaftabschnitt 6 weist jeweils eine Ausnehmung 11 auf, zur Aufnahme des jeweiligen Stegs bei einem Verformen des jeweiligen Stegs nach radial innen. Vorliegend ist die Ausnehmung 11 als Durchgangsöffnung ausgebildet. Es ist aber auch denkbar, dass die Ausnehmung 11 als Rücksprung ausgebildet ist.

Vorliegend weist die jeweilige Ausnehmung 11 eine tangentiale Erstreckung auf, wobei die tangentiale Erstreckung der jeweiligen Ausnehmung 11 größer ist als eine tangentiale Erstreckung des jeweiligen Stegs. Dadurch wird vermieden, dass eine tangentiale Verformung des Stegs ein Verformen des Stegs nach radial innen behindert. Insofern ist ein gewisses tangentiales Spiel zwischen Ausnehmung 11 und Steg gegeben.

Vorliegend weist der Kopfabschnitt 9 in einem bezüglich des Schafts 5 radial äußeren Bereich mehrere den Kopfabschnitt 9 in axialer Richtung Z durchsetzende Durchtrittsöffnungen 12 auf, wobei die jeweilige Durchtrittsöffnung 12 benachbart zu jeweils einem der Halteelemente 8 ausgebildet ist. Diese Durchtrittsöffnungen 12 ermöglichen eine optische Kontrolle der Stellung der Halteelemente 8. Ferner ermöglichen die Durchtrittsöffnungen 12 eine optische Kontrolle der finalen Stellung des Stützelements 1 nach der Einbringung des Stützelements 1 in ein Bauteil, da bei einer korrekten Stellung die Haltelemente 8 zumindest teilweise von dem Bauteil verdeckt werden.

Es ist durchaus denkbar, dass das Lagermittel 4 unmittelbar an die Stützhülse 2 angespritzt ist.

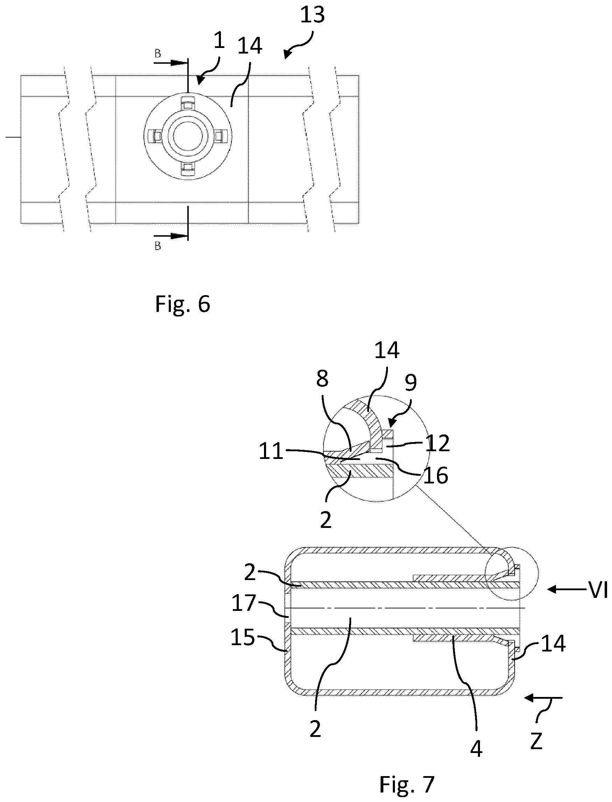

Die Figuren 6 bis 8 zweigen eine Anordnung, wobei die Anordnung ein Stützelement 1 gemäß der ersten Ausführungsform und einen Hohlkörper 13 aufweist, wobei der Hohlkörper 13 zwei in axialer Richtung Z beabstandete Wandungen 14, 15 aufweist, wobei die erste Wandung 14 der zwei Wandungen 14, 15 eine erste Durchgangsöffnung 16 und die zweite Wandung 15 der zwei Wandungen 14, 15 eine zweite Durchgangsöffnung 17, vorliegend eine der ersten Durchgangsöffnung 16 in einer axialen Richtung Z gegenüberliegende, zweite Durchgangsöffnung 17 aufweist, wobei das Stützelement 1 die erste Durchgangsöffnung 16 durchsetzt, wobei das Haltemittel, vorliegend die Halteelemente 8 auf einer der zweiten Wandung 15 zugewandten Seite der ersten Wandung 14 angeordnet sind und die Halteelemente 8 die erste Wandung 14 auf der der zweiten Wandung 15 zugewandten Seite in axialer Richtung Z hintergreifen. Dadurch wird ein Lösen bzw. ein Herausfallen des Stützelements 1 aus dem Hohlkörper 13 vermieden. Dadurch kann der Hohlkörper 13 gehandhabt werden, ohne dass die Gefahr eines Lösens oder Herausfallens besteht.

Da das Lagermittel 4 einen Kopfabschnitt 9 aufweist, der auf einer der zweiten Wandung 15 abgewandten Seite der ersten Wandung 14 angeordnet ist, ist ein weiteres Hineinrutschen des Stützelements 1 in den Hohlkörper 13 verhindert. Da die erste Wandung 14 zwischen dem Kopfabschnitt 9 und den Halteelementen 8 angeordnet ist, ist das Stützelement 1 besonders sicher, insbesondere verliersicher, in dem Hohlkörper 13 gelagert.

Da das Lagermittel 4 eine geringere radiale Ausdehnung als die erste Durchgangsöffnung 16 aufweist und zudem typischerweise aus einem elastisch verformbaren Material besteht, kann das Stützelement 1 in der radialen Richtung etwas verschoben werden, bspw. um Fertigungstoleranzen, insbesondere der beiden Durchgangsöffnungen 16, 17, auszugleichen.

Vorliegend kontaktiert die Stützhülse 2 die zweite Wandung 15 auf einer der ersten Wandung 14 zugewandten Seite.

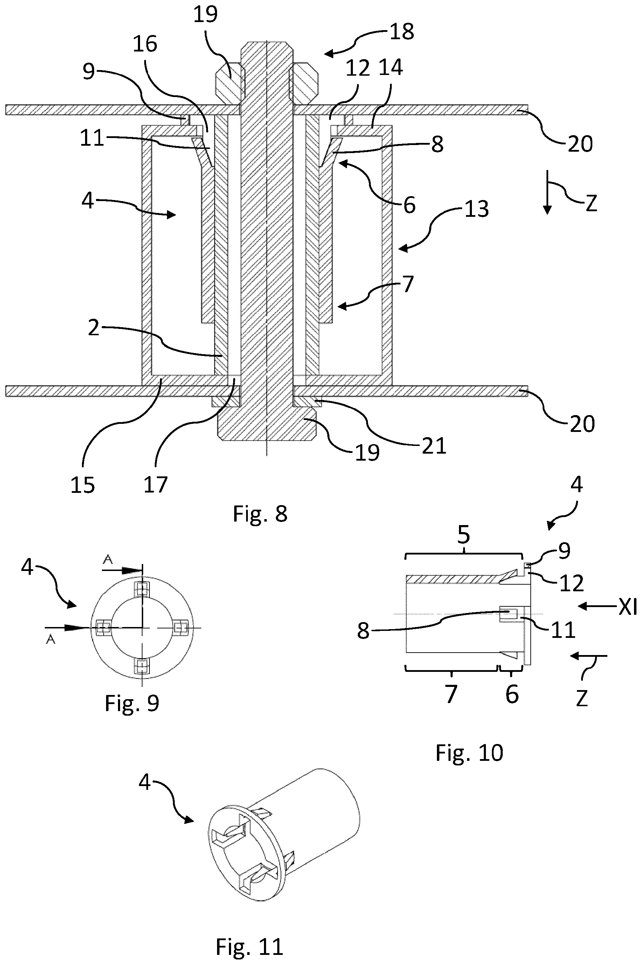

Die Anordnung der Figur 8 weist zudem ein Befestigungsmittel 18 auf, wobei das Befestigungsmittel 18 das Stützelement 1, die erste Durchgangsöffnung 16 und die zweite Durchgangsöffnung 17 durchsetzt, wobei das Befestigungsmittel 18 auf den einander abgewandten Seiten der zwei Wandungen 14, 15 jeweils ein Anschlagselement 19 aufweist, wobei das eine Anschlagselement 19 gegenüber dem anderen Anschlagselement 19 in der axialen Richtung Z verstellbar ist.

Die Anschlagselemente 19 dienen dem Verspannen des Befestigungsmittels gegen den Hohlkörper 13. Bei dem Befestigungsmittel 18 kann es sich beispielsweise um eine Schrauben-Mutter-Anordnung oder eine Anordnung von einem Gewindestab und zwei Muttern handeln. Typischerweise werden zwischen den Hohlkörper 13 und zumindest einem der Anschlagselemente 19 weitere Bauteile eingebracht, die auf diese Weise mit dem Hohlkörper 13 verbunden werden. In der Figur 8 sind zwei plattenförmige Bauteile 20 auf diese Weise mit dem Hohlkörper 13 verbunden. Zwischen einem der Anschlagselemente 19 und einem der plattenförmigen Bauteile 20 ist eine Unterlegscheibe 21 angeordnet.

Ein Verfahren zur Bildung einer Anordnung gemäß Figuren 6 bis 8 weist die folgenden Verfahrensschritte auf:
- Bereitstellen eines Lagermittels 4,
- Bereitstellen einer Stützhülse 2, wobei die Stützhülse 2 mit dem Lagermittel 4 verbunden ist oder die Stützhülse 2 mit dem Lagermittel 4 verbindbar ist, vorzugsweise in axialer Richtung Z in das Lagermittel 4 einsteckbar ist,
- Bereitstellen eines Hohlkörpers 13, wobei der Hohlkörper 13 zwei in axialer Richtung Z beabstandete Wandungen 14, 15 aufweist, wobei die erste Wandung 14 der zwei Wandungen 14, 15 eine erste Durchgangsöffnung 16 und die zweite Wandung 15 der zwei Wandungen 14, 15 eine zweite Durchgangsöffnung 17, vorzugsweise eine der ersten Durchgangsöffnung 16 in einer axialen Richtung Z gegenüberliegende, zweite Durchgangsöffnung 17, aufweist,
- Einführen des Lagermittels 4 in die erste Durchgangsöffnung 16 von einer der zweiten Wandung 15 abgewandten Seite der ersten Wandung 14 aus, derart, dass das Haltemittel beim Einführen zunächst entgegen der Rückstellkraft nach radial innen verformt wird und im Anschluss an die Verformung nach radial innen sich das Haltemittel aufgrund der Rückstellkraft nach radial außen verformt, sodass das Haltemittel auf einer der zweiten Wandung 15 zugewandten Seite der ersten Wandung 14 angeordnet ist und die erste Wandung 14 auf der der zweiten Wandung 15 zugewandten Seite in axialer Richtung Z hintergreift.

Es ist durchaus denkbar, dass die Stützhülse 2 und das Lagermittel 4 separate Bauteile bilden, wobei die Stützhülse 2, im Anschluss an das Einführen des Lagermittels 4 in die erste Durchgangsöffnung 16, in das Lagermittel 4 eingeführt, insbesondere eingesteckt, wird.

Das Einführen des Lagermittels 4 in die erste Durchgangsöffnung 16 und/oder das Einführen der Stützhülse 2 in das Lagermittel 4 erfolgt vorzugsweise händisch.

Die Figuren 9 bis 11 zeigen das Lagermittel 4 der ersten Ausführungsform des Stützelements 1.

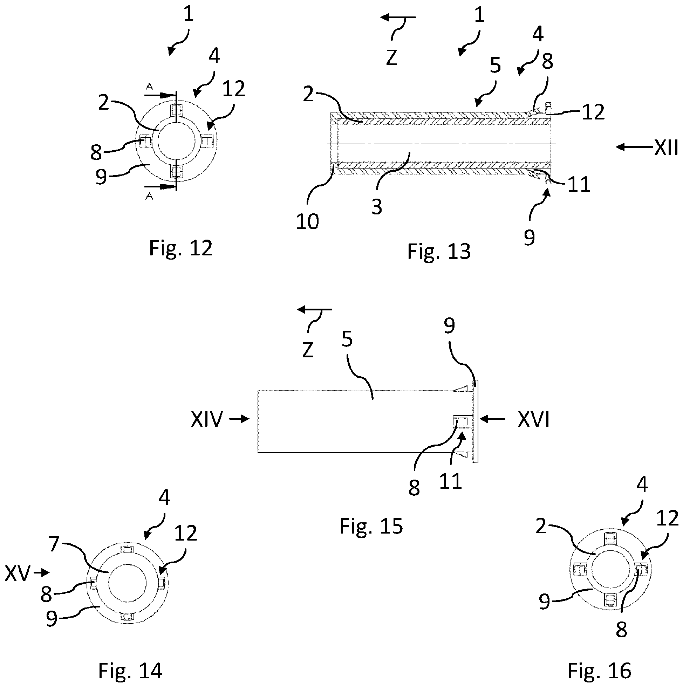

Die in den Figuren 12 bis 16 gezeigte zweite Ausführungsform unterscheidet sich von der ersten Ausführungsform im Wesentlichen durch die Gestaltung des Lagermittels 4. Die Stützhülse 2 steht nicht gegenüber dem Lagermittel 4 hervor. Zudem weist der zweite Schaftabschnitt 7 einen die Stützhülse 2 in axialer Richtung Z hintergreifenden Abschnitt 10 auf. Dies ist insbesondere von Vorteil, wenn die zweite Wandung 15 von der Stützhülse 2 elektrisch isoliert werden soll.

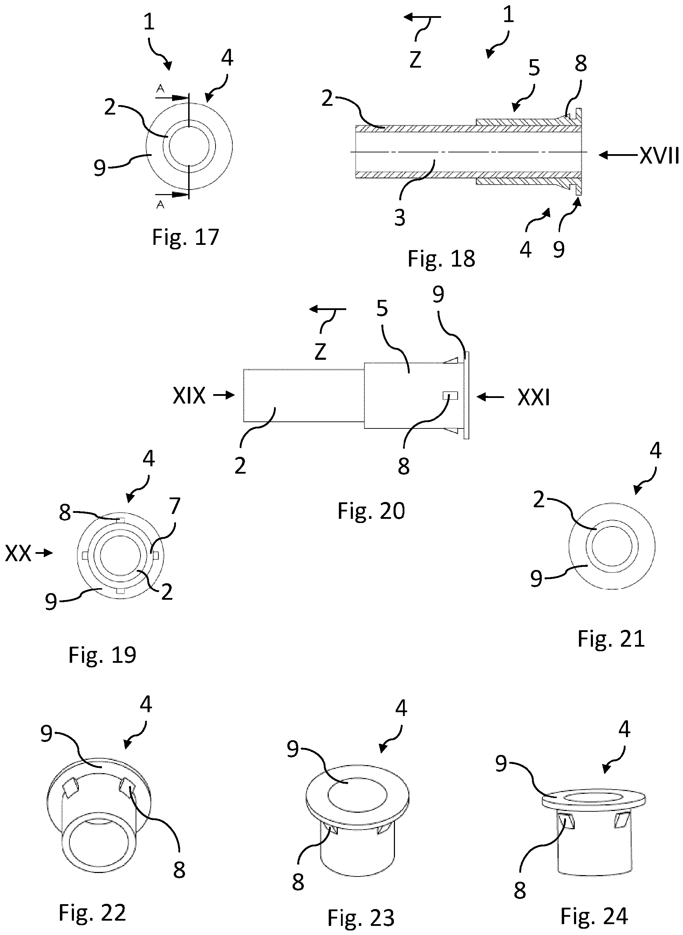

Die in den Figuren 17 bis 21 gezeigte dritte Ausführungsform unterscheidet sich von der ersten Ausführungsform im Wesentlichen durch die Gestaltung des Lagermittels 4. Das Lagermittel 4 weist keine Ausnehmungen auf. Das jeweilige Halteelement 8 ist zudem keilförmig ausgebildet. Darüber hinaus weist der Kopfabschnitt 9 keine Durchtrittsöffnungen auf.

Die Figuren 22 bis 24 zeigen das Lagermittel 4 der dritten Ausführungsform des Stützelements 1.

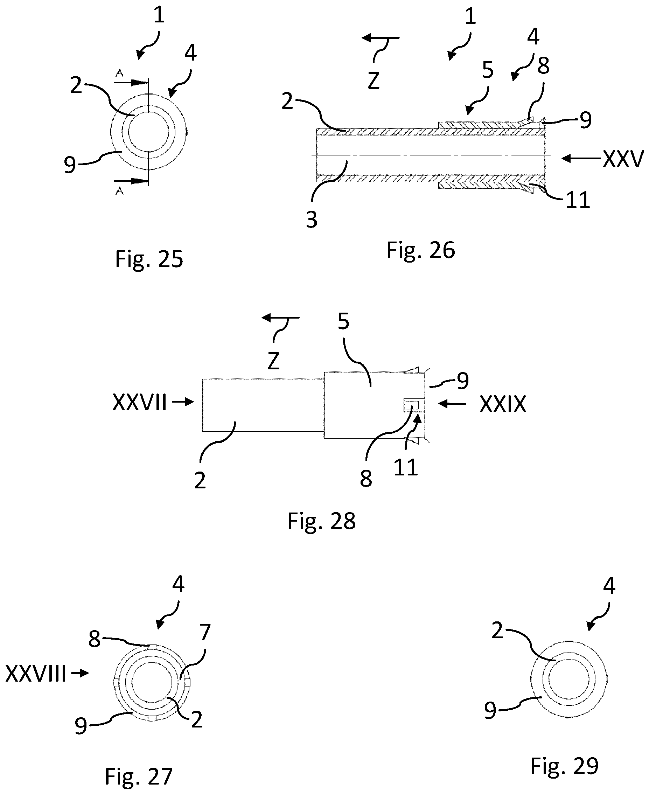

Die in den Figuren 25 bis 29 gezeigte vierte Ausführungsform unterscheidet sich von der ersten Ausführungsform im Wesentlichen durch die Gestaltung des Lagermittels 4. Der Kopfabschnitt 9 ist keilförmig ausgebildet und steht nur gegenüber dem zweiten Schaftabschnitt 7 radial außen hervor und nicht gegenüber dem ersten Schaftabschnitt 6, vorliegend stehen nämlich die Halteelemente 8 radial außen gegenüber dem Kopfabschnitt 9 hervor. Darüber hinaus weist der Kopfabschnitt 9 keine Durchtrittsöffnungen auf.

Die im Zusammenhang mit dem Stützelement 1 offenbarten Merkmale, die das Lagermittel 4 betreffen, gelten entsprechend für das Lagermittel 4 als solches, also auch ohne das Vorliegen eines Stützelements 1.

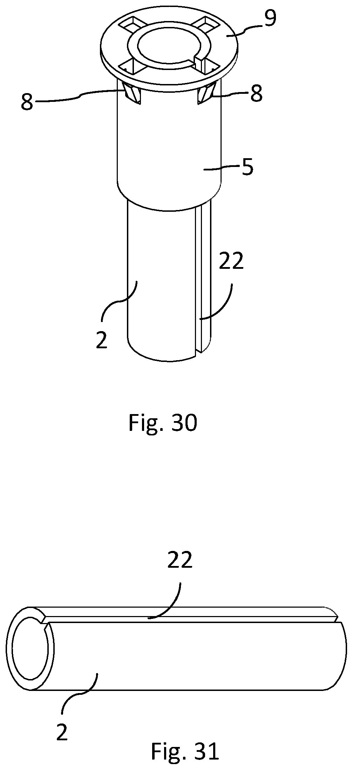

Die in den Figuren 30 und 31 gezeigte fünfte Ausführungsform unterscheidet sich von der ersten Ausführungsform dadurch, dass statt einer als rotationssymetrisches Rohr ausgebildeten Stützhülse 2 eine solche Stützhülse 2 verwendet wird, die über deren gesamte axiale Länge mit einem Schlitz 22 versehen ist. Diese Stützhülse 2 wird aus einem Metallstreifen gebogen.

### Bezugszeichenliste

- 1: Stützelement
- 2: Stützhülse
- 3: Durchgangsöffnung
- 4: Lagermittel
- 5: Schaft
- 6: erster Schaftabschnitt
- 7: zweiter Schaftabschnitt
- 8: Halteelement
- 9: Kopfabschnitt
- 10: Abschnitt
- 11: Ausnehmung
- 12: Durchtrittsöffnung
- 13: Hohlkörper
- 14: erste Wandung
- 15: zweite Wandung
- 16: erste Durchgangsöffnung
- 17: zweite Durchgangsöffnung
- 18: Befestigungsmitte
- 19: Anschlagselement
- 20: Bauteil
- 21: Unterlegscheibe
- 22: Schlitz

- Z: axiale Richtung

## Patentansprüche

1. Stützelement (1), insbesondere zur Aufnahme von mittels eines Befestigungsmittels (18) aufgebrachten axialen Kräften, wobei das Stützelement (1) eine Stützhülse (2) aufweist, wobei die Stützhülse (2) eine in axialer Richtung (Z) ausgebildete Durchgangsöffnung (3), insbesondere zur Aufnahme des Befestigungsmittels (18), aufweist, wobei das Stützelement (1) ein Lagermittel (4) aufweist, wobei die Stützhülse (2) in dem Lagermittel (4) gelagert ist, wobei die Stützhülse (2) und das Lagermittel (4) miteinander verbunden sind, wobei das Lagermittel (4) einen Schaft (5) mit einem ersten Schaftabschnitt (6) und einem in axialer Richtung (Z) an den ersten Schaftabschnitt (6) angrenzenden zweiten Schaftabschnitt (7) aufweist, wobei der erste Schaftabschnitt (6) ein Haltemittel aufweist, wobei das Haltemittel gegenüber dem zweiten Schaftabschnitt (7) nach radial außen hervorsteht und entgegen einer Rückstellkraft nach radial innen verformbar ist, wobei das Lagermittel (4) aus einem ersten Material besteht und die Stützhülse (2) aus einem zweiten Material besteht, wobei das erste Material und das zweite Material unterschiedlich sind, wobei das erste Material ein Kunststoff ist und das zweite Material ein Metall oder eine Legierung ist.

2. Stützelement nach Anspruch 1, wobei das Haltemittel mehrere Halteelemente (8) aufweist.

3. Stützelement nach Anspruch 1 oder 2, wobei das Lagermittel (4) einen Kopfabschnitt (9) aufweist, wobei der Schaft (5) in der axialen Richtung (Z) an den Kopfabschnitt (9) angrenzt, wobei der Kopfabschnitt (9) nach radial außen gegenüber dem zweiten Schaftabschnitt (7) hervorsteht, vorzugsweise gegenüber dem ersten Schaftabschnitt (6) hervorsteht.

4. Stützelement nach einem der Ansprüche 1 bis 3, wobei das zweite Material ein größere Härte aufweist als das erste Material.

5. Stützelement nach einem der Ansprüche 1 bis 4, wobei der radiale Überstand des Haltemittels, insbesondere des jeweiligen Halteelements (8), gegenüber dem zweiten Schaftabschnitt (7) entgegen der axialen Richtung (Z) zunimmt, insbesondere das Haltemittel, vorzugsweise das jeweilige Halteelement (8), keilförmig ausgebildet ist.

6. Stützelement nach einem der Ansprüche 1 bis 5, wobei der zweite Schaftabschnitt (7) einen die Stützhülse (2) in axialer Richtung (Z) hintergreifenden Abschnitt (10) aufweist.

7. Stützelement nach einem der Ansprüche 1 bis 6, wobei das Haltemittel mehrere als Stege ausgebildete Halteelemente (8) aufweist, wobei der jeweilige Steg im Bereich eines Endes des Stegs mit dem übrigen Schaft (5) verbunden ist und das andere Ende des jeweiligen Stegs ein freies Ende ist.

8. Stützelement nach Anspruch 7, wobei der erste Schaftabschnitt (6) eine Ausnehmung (11) zur Aufnahme der Stege, bei einem Verformen der Stege nach radial innen, aufweist oder wobei der erste Schaftabschnitt (6) jeweils eine Ausnehmung (11) zur Aufnahme des jeweiligen Stegs, bei einem Verformen des jeweiligen Stegs nach radial innen, aufweist.

9. Stützelement nach Anspruch 8, wobei die jeweilige Ausnehmung (11) eine tangentiale Erstreckung aufweist, wobei die tangentiale Erstreckung der jeweiligen Ausnehmung (11) größer ist als eine tangentiale Erstreckung des jeweiligen Stegs.

10. Stützelement nach einem der Ansprüche 3 bis 9, wobei der Kopfabschnitt (9) in einem bezüglich des Schafts (5) radial äußeren Bereich zumindest eine den Kopfabschnitt (9) in axialer Richtung (Z) durchsetzende Durchtrittsöffnung (12) aufweist, insbesondere die zumindest eine Durchtrittsöffnung (12) benachbart zu dem Haltemittel oder einem der Halteelemente (8) ausgebildet ist, oder wobei der Kopfabschnitt (9) in einem bezüglich des Schafts (5) radial äußeren Bereich mehrere den Kopfabschnitt (9) in axialer Richtung (Z) durchsetzende Durchtrittsöffnungen (12) aufweist, insbesondere die jeweilige Durchtrittsöffnung (12) benachbart zu jeweils einem der Halteelemente (8) ausgebildet ist.

11. Anordnung, wobei die Anordnung ein Stützelement (1) nach einem der Ansprüche 1 bis 10 und einen Hohlkörper (13) aufweist, wobei der Hohlkörper (13) zwei in axialer Richtung (Z) beabstandete Wandungen (14, 15) aufweist, wobei die erste Wandung (14) der zwei Wandungen (14, 15) eine erste Durchgangsöffnung (16) und die zweite Wandung (15) der zwei Wandungen (14, 15) eine zweite Durchgangsöffnung (17), vorzugsweise eine der ersten Durchgangsöffnung (16) in einer axialen Richtung (Z) gegenüberliegende, zweite Durchgangsöffnung (17) aufweist, wobei das Stützelement (1) die erste Durchgangsöffnung (16) durchsetzt, wobei das Haltemittel auf einer der zweiten Wandung (15) zugewandten Seite der ersten Wandung (14) angeordnet ist und das Haltemittel die erste Wandung (14) auf der der zweiten Wandung (15) zugewandten Seite in axialer Richtung (Z) hintergreift.

12. Anordnung nach Anspruch 11, wobei das Lagermittel (4) oder die Stützhülse (2) die zweite Wandung (15) auf einer der ersten Wandung (14) zugewandten Seite kontaktiert.

13. Verfahren zur Bildung einer Anordnung nach Anspruch 11 oder 12, wobei das Verfahren die folgenden Verfahrensschritte aufweist:
- Bereitstellen eines Stützelements (1) nach einem der Ansprüche 1 bis 10,
- Bereitstellen eines Hohlkörpers (13), wobei der Hohlkörper (13) zwei in axialer Richtung (Z) beabstandete Wandungen (14, 15) aufweist, wobei die erste Wandung (14) der zwei Wandungen (14, 15) eine erste Durchgangsöffnung (16) und die zweite Wandung (15) der zwei Wandungen (14, 15) eine zweite Durchgangsöffnung (17), vorzugsweise eine der ersten Durchgangsöffnung (16) in einer axialen Richtung (Z) gegenüberliegende, zweite Durchgangsöffnung (17), aufweist,
- Einführen des Lagermittels (4) in die erste Durchgangsöffnung (16) von einer der zweiten Wandung (15) abgewandten Seite der ersten Wandung (14) aus, derart, dass das Haltemittel beim Einführen zunächst entgegen der Rückstellkraft nach radial innen verformt wird und im Anschluss an die Verformung nach radial innen sich das Haltemittel aufgrund der Rückstellkraft nach radial außen verformt, sodass das Haltemittel auf einer der zweiten Wandung (15) zugewandten Seite der ersten Wandung (14) angeordnet ist und die erste Wandung (14) auf der der zweiten Wandung (15) zugewandten Seite in axialer Richtung (Z) hintergreift.

14. Verfahren nach Anspruch 13, wobei die Stützhülse (2) und das Lagermittel (4) zunächst separate Bauteile bilden, wobei die Stützhülse (2), im Anschluss an das Einführen des Lagermittels (4) in die erste Durchgangsöffnung (16), in das Lagermittel (4) eingeführt wird.

15. Verfahren nach Anspruch 13 oder 14, wobei das Einführen des Lagermittels (4) in die erste Durchgangsöffnung (16) und/oder das Einführen der Stützhülse (2) in das Lagermittel (4) händisch erfolgt.

## Claims

1. Support element (1), in particular for receiving axial forces applied by means of a fastening means (18), wherein the support element (1) has a support sleeve (2), wherein the support sleeve (2) has a through-opening (3) which is configured in the axial direction (Z), in particular for receiving the fastening means (18), wherein the support element (1) has a bearing means (4), wherein the support sleeve (2) is mounted in the bearing means (4), wherein the support sleeve (2) and the bearing means (4) are connected together, wherein the bearing means (4) has a shank (5) with a first shank portion (6) and a second shank portion (7) adjoining the first shank portion (6) in the axial direction (Z), wherein the first shank portion (6) has a holding means, wherein the holding means protrudes radially outwardly relative to the second shank portion (7) and is deformable radially inwardly counter to a restoring force, wherein the bearing means (4) consists of a first material and the support sleeve (2) consists of a second material, wherein the first material and the second material are different, wherein the first material is a plastic and the second material is metal or an alloy.

2. Support element according to Claim 1, wherein the holding means has a plurality of holding elements (8) .

3. Support element according to Claim 1 or 2, wherein the bearing means (4) has a head portion (9), wherein the shank (5) adjoins the head portion (9) in the axial direction (Z), wherein the head portion (9) protrudes radially outwardly relative to the second shank portion (7), preferably protrudes relative to the first shank portion (6).

4. Support element according to one of Claims 1 to 3, wherein the second material has a greater hardness than the first material.

5. Support element according to one of Claims 1 to 4, wherein the radial projecting portion of the holding means, in particular of the respective holding element (8), increases relative to the second shank portion (7) counter to the axial direction (Z), in particular the holding means, preferably the respective holding element (8), is of wedge-shaped configuration.

6. Support element according to one of Claims 1 to 5, wherein the second shank portion (7) has a portion (10) engaging behind the support sleeve (2) in the axial direction (Z).

7. Support element according to one of Claims 1 to 6, wherein the holding means has a plurality of holding elements (8) which are configured as projections, wherein the respective projection is connected in the region of one end of the projection to the remaining shank (5) and the other end of the respective projection is a free end.

8. Support element according to Claim 7, wherein the first shank portion (6) has a recess (11) for receiving the projections, when the projections are deformed radially inwardly, or wherein the first shank portion (6) in each case has a recess (11) for receiving the respective projection, when the respective projection is deformed radially inwardly.

9. Support element according to Claim 8, wherein the respective recess (11) has a tangential extent, wherein the tangential extent of the respective recess (11) is greater than a tangential extent of the respective projection.

10. Support element according to one of Claims 3 to 9, wherein in a radially external region relative to the shank (5) the head portion (9) has at least one through-opening (12) penetrating the head portion (9) in the axial direction (Z), in particular the at least one through-opening (12) is configured adjacent to the holding means or one of the holding elements (8), or wherein in a radially external region relative to the shank (5) the head portion (9) has a plurality of through-openings (12) penetrating the head portion (9) in the axial direction (Z), in particular the respective through-opening (12) is configured in each case adjacent to one of the holding elements (8) .

11. Arrangement, wherein the arrangement has a support element (1) according to one of Claims 1 to 10 and a hollow body (13), wherein the hollow body (13) has two walls (14, 15) which are spaced apart in the axial direction (Z), wherein the first wall (14) of the two walls (14, 15) has a first through-opening (16) and the second wall (15) of the two walls (14, 15) has a second through-opening (17), preferably a second through-opening (17) opposing the first through-opening (16) in an axial direction (Z), wherein the support element (1) penetrates the first through-opening (16), wherein the holding means is arranged on a side of the first wall (14) facing the second wall (15) and the holding means engages behind the first wall (14) on the side facing the second wall (15) in the axial direction (Z).

12. Arrangement according to Claim 11, wherein the bearing means (4) or the support sleeve (2) is in contact with the second wall (15) on a side facing the first wall (14).

13. Method for forming an arrangement according to Claim 11 or 12, wherein the method has the following method steps:
- providing a support element (1) according to one of Claims 1 to 10,
- providing a hollow body (13), wherein the hollow body (13) has two walls (14, 15) which are spaced apart in the axial direction (Z), wherein the first wall (14) of the two walls (14, 15) has a first through-opening (16) and the second wall (15) of the two walls (14, 15) has a second through-opening (17), preferably a second through-opening (17) opposing the first through-opening (16) in an axial direction (Z),
- inserting the bearing means (4) into the first through-opening (16) from a side of the first wall (14) remote from the second wall (15), such that the holding means when inserted is initially deformed radially inwardly counter to the restoring force and, following the radially inward deformation, the holding means is deformed radially outwardly due to the restoring force, so that the holding means is arranged on a side of the first wall (14) facing the second wall (15) and engages behind the first wall (14) on the side facing the second wall (15) in the axial direction (Z) .

14. Method according to Claim 13, wherein the support sleeve (2) and the bearing means (4) initially form separate components, wherein following the insertion of the bearing means (4) into the first through-opening (16), the support sleeve (2) is inserted into the bearing means (4).

15. Method according to Claim 13 or 14, wherein the insertion of the bearing means (4) into the first through-opening (16) and/or the insertion of the support sleeve (2) into the bearing means (4) is carried out manually.

## Revendications

1. Élément de support (1), notamment pour la réception de forces axiales appliquées au moyen d'un moyen de fixation (18), l'élément de support (1) présentant une douille de support (2), la douille de support (2) présentant une ouverture de passage (3) réalisée dans la direction axiale (Z), notamment pour la réception du moyen de fixation (18), l'élément de support (1) présentant un moyen de palier (4), la douille de support (2) étant logée dans le moyen de palier (4), la douille de support (2) et le moyen de palier (4) étant reliés entre eux, le moyen de support (4) présentant une tige (5) avec une première section de tige (6) et une deuxième section de tige (7) adjacente à la première section de tige (6) dans la direction axiale (Z), la première section de tige (6) présentant un moyen de retenue, le moyen de retenue faisant saillie radialement vers l'extérieur par rapport à la deuxième section de tige (7) et étant déformable radialement vers l'intérieur à l'encontre d'une force de rappel, le moyen de palier (4) étant constitué d'un premier matériau et la douille de support (2) étant constituée d'un deuxième matériau, le premier matériau et le deuxième matériau étant différents, le premier matériau étant une matière plastique et le deuxième matériau étant un métal ou un alliage.

2. Élément de support selon la revendication 1, dans lequel le moyen de retenue présente plusieurs éléments de retenue (8).

3. Élément de support selon la revendication 1 ou 2, dans lequel le moyen de palier (4) présente une section de tête (9), la tige (5) étant adjacente à la section de tête (9) dans la direction axiale (Z), la section de tête (9) faisant saillie radialement vers l'extérieur par rapport à la deuxième section de tige (7), de préférence faisant saillie par rapport à la première section de tige (6) .

4. Élément de support selon l'une quelconque des revendications 1 à 3, dans lequel le deuxième matériau présente une dureté supérieure à celle du premier matériau.

5. Élément de support selon l'une quelconque des revendications 1 à 4, dans lequel la saillie radiale du moyen de retenue, notamment de l'élément de retenue respectif (8), par rapport à la deuxième section de tige (7) augmente à l'encontre de la direction axiale (Z), notamment le moyen de retenue, de préférence l'élément de retenue respectif (8), est réalisé sous forme cunéiforme.

6. Élément de support selon l'une quelconque des revendications 1 à 5, dans lequel la deuxième section de tige (7) présente une section (10) qui s'engage derrière la douille de support (2) dans la direction axiale (Z).

7. Élément de support selon l'une quelconque des revendications 1 à 6, dans lequel le moyen de retenue présente plusieurs éléments de retenue (8) réalisés sous forme d'entretoises, l'entretoise respective étant reliée au reste de la tige (5) dans la zone d'une extrémité de l'entretoise et l'autre extrémité de l'entretoise respective étant une extrémité libre.

8. Élément de support selon la revendication 7, dans lequel la première section de tige (6) présente un évidement (11) pour la réception des entretoises, lors d'une déformation des entretoises radialement vers l'intérieur, ou dans lequel la première section de tige (6) présente respectivement un évidement (11) pour la réception de l'entretoise respective, lors d'une déformation de l'entretoise respective radialement vers l'intérieur.

9. Élément de support selon la revendication 8, dans lequel l'évidement respectif (11) présente une extension tangentielle, l'extension tangentielle de l'évidement respectif (11) étant plus grande qu'une extension tangentielle de l'entretoise respective.

10. Élément de support selon l'une quelconque des revendications 3 à 9, dans lequel la section de tête (9) présente, dans une zone radialement extérieure par rapport à la tige (5), au moins une ouverture de passage (12) traversant la section de tête (9) dans la direction axiale (Z), notamment l'au moins une ouverture de passage (12) est réalisée au voisinage du moyen de retenue ou de l'un des éléments de retenue (8), ou dans lequel la section de tête (9) présente, dans une zone radialement extérieure par rapport à la tige (5), plusieurs ouvertures de passage (12) traversant la section de tête (9) dans la direction axiale (Z), notamment l'ouverture de passage (12) respective est réalisée au voisinage de l'un des éléments de retenue (8) respectif.

11. Agencement, l'agencement présentant un élément de support (1) selon l'une quelconque des revendications 1 à 10 et un corps creux (13), le corps creux (13) présentant deux parois (14, 15) espacées dans la direction axiale (Z), la première paroi (14) des deux parois (14, 15) présentant une première ouverture de passage (16) et la deuxième paroi (15) des deux parois (14, 15) présentant une deuxième ouverture de passage (17), de préférence une deuxième ouverture de passage (17) opposée à la première ouverture de passage (16) dans une direction axiale (Z), l'élément de support (1) traversant la première ouverture de passage (16), le moyen de retenue étant agencé sur un côté de la première paroi (14) tourné vers la deuxième paroi (15) et le moyen de retenue s'engageant derrière la première paroi (14) sur le côté tourné vers la deuxième paroi (15) dans la direction axiale (Z).

12. Agencement selon la revendication 11, dans lequel le moyen de palier (4) ou la douille de support (2) est en contact avec la deuxième paroi (15) sur un côté tourné vers la première paroi (14).

13. Procédé de formation d'un agencement selon la revendication 11 ou 12, le procédé présentant les étapes de procédé suivantes :
- la fourniture d'un élément de support (1) selon l'une quelconque des revendications 1 à 10,
- la fourniture d'un corps creux (13), le corps creux (13) présentant deux parois (14, 15) espacées dans la direction axiale (Z), la première paroi (14) des deux parois (14, 15) présentant une première ouverture de passage (16) et la deuxième paroi (15) des deux parois (14, 15) présentant une deuxième ouverture de passage (17), de préférence une deuxième ouverture de passage (17) opposée à la première ouverture de passage (16) dans une direction axiale (Z),
- l'introduction du moyen de palier (4) dans la première ouverture de passage (16) à partir d'un côté de la première paroi (14) détourné de la deuxième paroi (15), de telle sorte que, lors de l'introduction, le moyen de retenue est d'abord déformé radialement vers l'intérieur à l'encontre de la force de rappel et, à la suite de la déformation radialement vers l'intérieur, le moyen de retenue se déforme radialement vers l'extérieur en raison de la force de rappel, de telle sorte que le moyen de retenue est agencé sur un côté de la première paroi (14) tourné vers la deuxième paroi (15) et s'engage derrière la première paroi (14) sur le côté tourné vers la deuxième paroi (15) dans la direction axiale (Z).

14. Procédé selon la revendication 13, dans lequel la douille de support (2) et le moyen de palier (4) forment d'abord des composants séparées, la douille de support (2), à la suite de l'introduction du moyen de palier (4) dans la première ouverture de passage (16), étant introduite dans le moyen de palier (4).

15. Procédé selon la revendication 13 ou 14, dans lequel l'introduction du moyen de palier (4) dans la première ouverture de passage (16) et/ou l'introduction de la douille de support (2) dans le moyen de palier (4) est effectuée manuellement.
